# EUROPÄISCHE PATENTSCHRIFT

(11) **EP 3 216 558 B1**
(45) Veröffentlichungstag und Bekanntmachung des Hinweises auf die Patenterteilung: **08.04.2020**
(21) Anmeldenummer: 17156125.1
(22) Anmeldetag: 14.02.2017
(51) Int. Cl.: B23Q 3/154, B25B 11/02

(54) **AUFNAHMEVORRICHTUNG**
HOLDING DEVICE
DISPOSITIF DE RÉCEPTION

(30) Priorität: 07.03.2016 DE 102016002742
(43) Veröffentlichungstag der Anmeldung: 13.09.2017
(73) Patentinhaber: VOLLMER WERKE Maschinenfabrik GmbH, 88400 Biberach/Riss (DE)
(72) Erfinder: BAYER, Johann, 88454 Hochdorf (DE); KAYAPINAR, Haydar, 88471 Laupheim (DE)
(74) Vertreter: Thum, Bernhard

(56) Entgegenhaltungen:
- EP-A2- 1 525 943
- GB-A- 170 306
- US-A- 3 854 711
- US-A1- 2014 043 123

## Beschreibung

Die vorliegende Erfindung betrifft eine Aufnahmevorrichtung zum zumindest abschnittsweisen Aufnehmen von zu bearbeitenden oder bereits bearbeiteten Werkstücken in wenigstens einer vorbestimmten Position. Insbesondere betrifft die vorliegende Erfindung eine Aufnahmevorrichtung zum zumindest abschnittsweisen Aufnehmen von Werkstücken mit Werkstückschaft in wenigstens einer vorbestimmten Position. Der Werkstückschaft kann dabei zylinderförmig, kegelförmig oder im Querschnitt polygonal ausgebildet sein.

Aus dem Stand der Technik sind Vorrichtungen der in EP 1 525 943 A2 offenbarten Art bekannt. Dieses Dokument offenbart eine Haltevorrichtung für zu schleifende Werkstücke. Die Haltevorrichtung weist mehrere Aufnahmeeinheiten zur Aufnahme von zu schleifenden Werkstücken auf, welche jeweils einen Werkstückschaft aufweisen. Jede Aufnahmeeinheit umfasst eine Anschlageinheit und eine Klemmeinheit. Ein Werkstückschaft ist zwischen eine Anschlageinheit und eine Klemmeinheit einer Aufnahmeeinheit einbringbar. Jede Klemmeinheit ist gegen die Anschlageinheit vorgespannt, um den Werkstückschaft gegen die Anschlageinheit mittels der Klemmeinheit drücken zu können. Die Klemmeinheiten sind mit zwei Hebelarmen ausgebildet, von denen einer mit einer Druckfeder belastet wird. Die Druckfeder ist in einem Kanal angeordnet. In einem Schlitz ist der an der Druckfeder anliegende Hebelarm bewegbar. Zum Öffnen der Klemmeinheit müssen die Hebelarme entgegen der Federkraft der Druckfeder bewegt werden.

US 2014/043123 A1 offenbart eine magnetische Halterungsvorrichtung mit einem Alnico-Magnet und einer Spule, die den Alnico-Magnet umschließt. Die magnetische Halterungsvorrichtung weist ferner eine Platteneinheit auf, die beiderseits einer magnetischen Substanz angeordnet ist. Die Platteneinheit wird von unmagnetischen Platten und magnetischen Platten gebildet. Ein Werkstück kann durch eine Magnetkraft an einer Außenseite der Platteneinheit gehalten werden.

Es ist eine Aufgabe der vorliegenden Erfindung eine Aufnahmevorrichtung der eingangs bezeichneten Art bereitzustellen, in der bei einfachem und kostengünstigem Aufbau unabhängig vom Durchmesser des Werkstücks ein Werkstück schnell aufgenommen und zuverlässig gehalten werden kann.

Diese Aufgabe wird mit einer Aufnahmevorrichtung der eingangs bezeichneten Art mit den Merkmalen des Anspruchs 1 gelöst.

Weitere Ausführungsformen der vorliegenden Erfindung gehen aus den abhängigen Ansprüchen hervor.

Die erfindungsgemäße Aufnahmevorrichtung zum zumindest abschnittsweisen Aufnehmen von Werkstücken, insbesondere zylindrischen Werkstücken, in wenigstens einer vorbestimmten Position umfasst:
- wenigstens eine Aufnahme zum zumindest abschnittsweisen Aufnehmen wenigstens eines Werkstücks, wobei die wenigstens eine Aufnahme wenigstens einen vorbestimmten Anlagebereich aufweist, an dem sich das wenigstens eine Werkstück in der vorbestimmten Position anlegt, und
- wenigstens eine magnetische Krafterzeugungseinheit zum Erzeugen einer Haltekraft, die das wenigstens eine Werkstück an dem wenigstens einen Anlagebereich in der vorbestimmten Position hält, wobei die von der wenigstens einen Krafterzeugungseinheit erzeugte Haltekraft berührungsfrei auf das wenigstens eine Werkstück einwirkt.

Die erfindungsgemäße Aufnahmevorrichtung ermöglicht eine schnelle und einfache Aufnahme eines Werkstücks in der wenigstens einen Aufnahme unabhängig vom Durchmesser des Werkstücks. Die aufgenommenen Werkstücke können in der wenigstens einen Aufnahme in einer vorbestimmten Position und einer vorbestimmten Lage bzw. Stellung gehalten werden. Die erfindungsgemäße Aufnahmevorrichtung ermöglicht das Einführen wenigstens eines Werkstücks in die wenigstens einen Aufnahme mittels eines einfachen Bewegungsmusters. Die Entnahme des wenigstens einen Werkstücks kann ebenfalls mit einem derart einfachen Bewegungsmuster erfolgen. Unter einem einfachen Bewegungsmuster ist in diesem Zusammenhang eine Bewegung zu verstehen, die im Wesentlichen in einer Richtung, beispielsweise in vertikaler Richtung erfolgt. Es sind somit bei der Aufnahmevorrichtung gemäß der vorliegenden Erfindung keine zusätzlichen Bewegungen notwendig, mit denen Fixierungsmittel, Klemmmittel oder ähnliches betätigt werden müssen. Mit anderen Worten muss bei der erfindungsgemäßen Aufnahmevorrichtung anders als beim Stand der Technik keine Klemmeinheit vor oder nach dem Einführen des Werkstücks in der Aufnahme betätigt werden. Dadurch kann die Aufnahme des wenigstens einen Werkstücks schnell und einfach erfolgen. Gemäß der Erfindung können die Werkstücke mit einer Bewegung in die Aufnahme eingeführt und dann von der berührungsfrei auf die Werkstücke einwirkenden Haltekraft an dem wenigstens einen Anlagebereich gehalten werden.

Das wenigstens eine Werkstück kann unmittelbar in der wenigstens einen Aufnahme aufgenommen werden. Das Werkstück kann jedoch auch in wenigstens einer Hülse angeordnet werden, wobei die Hülse mit dem Werkstück dann in der wenigstens einen Aufnahme aufgenommen werden kann.

Die erfindungsgemäße Aufnahmevorrichtung ist insbesondere zur Aufnahme von Werkstücken mit einem Werkstückschaft geeignet. Der Werkstückschaft kann zylinderförmig, kegelförmig oder im Querschnitt polygonal ausgebildet sein. Unter einem Werkstück ist in diesem Zusammenhang auch ein Rohling zu verstehen. Rohlinge können ebenfalls in der Aufnahmevorrichtung aufgenommen werden. Die Werkstücke, d. h. Werkstücke mit Werkzeugschaft oder Rohlinge, können unterschiedliche Durchmesser aufweisen und dennoch schnell und einfach in der erfindungsgemäßen Aufnahmevorrichtung aufgenommen sowie zuverlässig in dieser gehalten werden.

Die erfindungsgemäße Aufnahmevorrichtung weist ferner einen relativ einfachen Aufbau auf, da die erfindungsgemäße Vorrichtung keine mit einer Vorspannkraft beaufschlagten und mechanisch bewegbaren Fixierungsmittel bzw. Klemmeinheiten aufweist. Die erfindungsgemäße Aufnahmevorrichtung kann aus diesem Grund im Wesentlichen ohne bewegliche Teile realisiert werden. Dadurch kann die Funktion der Aufnahmevorrichtung dauerhaft sichergestellt werden.

Die erfindungsgemäßen Aufnahmevorrichtungen werden insbesondere für Beladevorrichtungen von Werkzeugmaschinen benötigt. Mit der Aufnahmevorrichtung können die Werkstücke vor und nach der Bearbeitung in einer vorbestimmten Position an der Aufnahmevorrichtung bereitgehalten werden. Dies ermöglicht die automatische Entnahme oder Beladung der Aufnahmevorrichtung mit einer Beladevorrichtung einer Werkzeugmaschine.

Gemäß einer Ausführungsform kann die wenigstens eine Aufnahme derart ausgebildet sein, dass das wenigstens eine Werkstück in einer vorbestimmten Einführrichtung in die Aufnahme einführbar ist. Die Einführrichtung kann beispielsweise im Wesentlichen der vertikalen Richtung entsprechen. Das wenigstens eine Werkstück kann ebenfalls in wenigstens einer vorbestimmten Entnahmerichtung aus der Aufnahme entnommen werden. Die Entnahmerichtung kann auch im Wesentlichen vertikal erfolgen. Mit anderen Worten kann das wenigstens eine Werkstück in der vorbestimmten Einführrichtung, beispielsweise in vertikaler Richtung, in die Aufnahme eingeführt und dann von der Krafterzeugungseinheit mittels der von dieser erzeugten Haltekraft an dem Anlagebereich gehalten werden, wobei die von der Krafterzeugungseinheit erzeugte Haltekraft berührungsfrei auf das wenigstens eine Werkstück einwirken kann. Das wenigstens eine Werkstück kann mittels der Haltekraft an den wenigstens einen Anlagebereich gezogen oder gedrückt werden. Werden zylindrische Werkstücke in der Aufnahmeeinrichtung aufgenommen, kann die Längsachse des wenigstens einen Werkstücks im Wesentlichen parallel zu der Einführrichtung oder zu der Entnahmerichtung des wenigstens einen Werkstücks verlaufen.

Der wenigstens eine Anlagebereich ist derart ausgebildet, dass das wenigstens eine Werkstück durch die wenigstens eine Krafterzeugungseinheit in einer vorbestimmten Position und einer vorbestimmten Lage oder Stellung in der wenigstens einen Aufnahme positionierbar ist. Wie voranstehend bereits erwähnt wurde, können in der Aufnahmevorrichtung bzw. in der wenigstens einen Aufnahme Werkstücke mit unterschiedlichen Durchmessern aufgenommen und durch eine berührungsfrei auf die Werkstücke einwirkende Haltekraft in der vorbestimmten Position und Stellung an dem Anlagebereich gehalten werden. Der Anlagebereich kann derart ausgebildet sein, dass im Fall von zylindrischen Werkstücken die Längsachse der Werkstücke in vertikaler Richtung verläuft. Der wenigstens eine Anlagebereich kann mit der wenigstens einen Krafterzeugungseinheit zusammenwirken, um die Werkstücke in einer vorbestimmten Lage bzw. Stellung und einer vorbestimmten Position in der Aufnahme aufnehmen und halten zu können.

Der wenigstens eine Anlagebereich kann wenigstens zwei Anlageflächen und einen gerundet oder gewölbt verlaufenden Anlageflächenabschnitt zur Anlage des Werkstücks aufweisen. Die wenigstens zwei Anlageflächen können zwischen sich einen vorbestimmten Winkel einschließen. Ferner können die wenigstens zwei Anlageflächen über den gewölbt verlaufenden Anlageflächenabschnitt miteinander verbunden sein. Werkstücke mit einem kleineren (Schaft-) Durchmesser können sich beispielsweise ausschließlich an den gerundeten oder gewölbt verlaufenden Anlageflächenabschnitt anlegen. Werkstücke mit einem größeren (Schaft-) Durchmesser können sich an die wenigstens zwei Anlageflächen anlegen, ohne dass diese Werkstücke mit größerem Durchmesser mit dem gewölbt verlaufenden Anlageflächenabschnitt in Kontakt kommen. Bei Werkstücken mit größeren (Schaft-) Durchmessern legen sich diese Werkstücke an jeweils einen Abschnitt der wenigstens zwei Anlageflächen an. Es können somit zwei Kontaktstellen zwischen dem Werkstück und den Anlageflächen bestehen. Die wenigstens zwei Anlageflächen verlaufen abgewinkelt auf den gewölbt verlaufenden Anlageflächenabschnitt zu und schließen zwischen sich einen vorbestimmten Winkel ein. Durch diesen abgewinkelten Verlauf der beiden Anlageflächen relativ zueinander, wird ermöglicht, dass Werkstücke mit sich relativ stark unterscheidenden (Schaft-) Durchmessern in einer vorbestimmten Position und einer vorbestimmten Lage bzw. Stellung in der Aufnahme aufgenommen werden können. Durch den abgewinkelten Verlauf der beiden Anlageflächen zueinander können die voranstehend genannten Kontaktstellen zwischen den Anlageflächen und dem aufzunehmenden Werkstück gebildet werden. Der Winkel den die wenigstens zwei Anlageflächen zwischen sich einschließen kann zwischen 90° und 170° liegen.

Der wenigstens eine Anlagebereich kann wenigstens einen Anlagepunkt oder wenigstens eine Anlagelinie aufweisen. Ein Anlagepunkt kann beispielsweise von wenigstens einem Vorsprung gebildet werden, an den sich das wenigstens eine Werkstück anlegen kann. Eine Anlagelinie kann beispielsweise von wenigstens einer Anlagekante gebildet werden, an die sich das wenigstens eine Werkstück anlegt.

Die von der wenigstens einen Krafterzeugungseinrichtung erzeugte Haltekraft kann im Wesentlichen senkrecht zur Einführrichtung des wenigstens einen Werkstücks auf das wenigstens eine Werkstück einwirken. Anders ausgedrückt wirkt die wenigstens eine Haltekraft in einer Richtung auf das wenigstens eine Werkstück, die senkrecht zur Längsachse des wenigstens einen Werkstücks verläuft. Die wenigstens eine Haltekraft kann somit das wenigstens eine Werkstück senkrecht zur Längsachse des Werkstücks an den wenigstens einen Anlagebereich ziehen oder drücken. Es ist jedoch auch denkbar, dass die von der wenigstens einen Krafterzeugungseinrichtung erzeugte Haltekraft schräg zur Einführrichtung oder in Einführrichtung auf das wenigstens eine Werkstück einwirkt.

Die wenigstens eine Krafterzeugungseinheit kann in dem wenigstens einen Anlagebereich der wenigstens einen Aufnahme angeordnet sein. Dadurch kann das wenigstens eine Werkstück direkt bzw. unmittelbar von der wenigstens einen Krafterzeugungseinheit mit der Haltekraft zum Halten des wenigstens einen Werkstücks an dem wenigstens einen Anlagebereich beaufschlagt werden. Die wenigstens eine Krafterzeugungseinheit kann somit in den wenigstens einen Anlagebereich integriert sein.

In dem wenigstens einen Anlagereich kann wenigstens eine Öffnung ausgebildet sein. In der wenigstens einen Öffnung kann die wenigstens eine Krafterzeugungseinrichtung aufgenommen sein. Die wenigstens eine Öffnung kann einen vorbestimmten Abschnitt des wenigstens einen gewölbt verlaufenden Anlageflächenabschnitts und/oder der wenigstens zwei Anlageflächen einnehmen. Die wenigstens eine Krafterzeugungseinrichtung kann einen Abschnitt der wenigstens einen gewölbt verlaufenden Anlageflächen und/oder der Anlageflächen bilden.

Die wenigstens eine Krafterzeugungseinheit kann über wenigstens ein Positionierelement in seiner vorbestimmten Position in der wenigstens einen Öffnung in dem Aufnahmebereich gehalten werden.

Die wenigstens eine Aufnahme kann eine Durchgangsöffnung mit einer umlaufenden Wandung sein. Die wenigstens zwei Anlageflächen und der die wenigstens zwei Anlageflächen verbindende gewölbte Anlageflächenabschnitt können Teil der umlaufenden Wandung sein. Die Aufnahme kann beispielsweise in Form eines Polygons mit abgerundeten Ecken ausgebildet sein. Die umlaufende Wandung kann senkrecht zur Oberseite oder Unterseite der Aufnahmevorrichtung verlaufen.

Gemäß einer Ausführungsform kann wenigstens ein plattenförmiges Element den Boden der wenigstens einen Aufnahme bilden. Die Aufnahmevorrichtung kann ein Element aufweisen, in dem die wenigstens eine Aufnahme ausgebildet ist, und wenigstens ein weiteres plattenförmiges Element, das den Boden der Aufnahme bildet. Die wenigstens eine Aufnahme kann in wenigstens einem weiteren plattenförmigen Element ausgebildet sein. An dem wenigstens einen plattenförmigen Element, das den Boden der Aufnahme bildet, können sich die Werkstücke abstützen. Im Fall von zylindrischen Werkstücken, können sich die Werkstücke mit einer ihrer Stirnseiten an dem plattenförmigen Element abstützen.

Die wenigstens zwei Anlageflächen und der gewölbt verlaufende Anlageflächenabschnitt verlaufen vorzugsweise orthogonal zu der Richtung der von der wenigstens einen Krafterzeugungsvorrichtung erzeugten Haltekraft. Die wenigstens zwei Anlageflächen und der gewölbt verlaufende Anlageflächenabschnitt können jedoch auch schräg zu der von der wenigstens einen Krafterzeugungsvorrichtung erzeugten Haltekraft verlaufen. Die wenigstens zwei Anlageflächen können im Wesentlichen senkrecht oder auch schräg zu dem wenigstens einem plattenförmigen Element verlaufen. Die wenigstens zwei Anlageflächen können beispielsweise in einem Winkel zwischen 10° bis 170° und insbesondere in einem Winkel von 45° bis 135° zu dem wenigstens einen plattenförmigen Element verlaufen. Die Wandung der wenigstens einen Aufnahme kann teilweise oder vollständig im Wesentlichen senkrecht zu dem wenigstens einem plattenförmigen Element und zur Richtung der von der Krafterzeugungsvorrichtung erzeugten Haltekraft verlaufen.

Die wenigstens eine Krafterzeugungseinheit weist wenigstens einen Magnet auf. Der wenigstens eine Magnet kann in der wenigstens einen Öffnung in dem Anlagebereich der wenigstens einen Aufnahme angeordnet sein. Der wenigstens eine Magnet kann in einer Hülse angeordnet sein. Die wenigstens eine Hülse kann zur Kopplung des wenigstens einen Magneten mit dem wenigstens einen Anlagebereich dienen. Mit der wenigstens einen Hülse kann wenigstens ein Pol des wenigstens einen Magneten gezielt in die wenigstens eine Aufnahme gerichtet werden, damit die Magnetkraft bzw. die Haltekraft des wenigstens einen Magneten zielgerichtet auf das wenigstens eine Werkstück einwirken kann. Dadurch kann sichergestellt werden, dass das wenigstens eine Werkstück von der berührungsfrei auf das Werkstück einwirkenden Haltekraft in seiner vorbestimmten Position und Lage in der wenigstens einen Aufnahme gehalten wird. Die wenigstens eine Hülse kann auch dazu dienen, den jeweils anderen Pol des wenigstens einen Magneten abzuschirmen, damit die Magnetkraft des Magneten möglichst auf weitere Komponenten der Aufnahmevorrichtung oder weitere Werkstücke nicht einwirkt bzw. diese Komponenten beeinträchtigt. Die wenigstens eine Hülse kann somit zum zielgerichteten Einsatz der von dem Magnet erzeugten Magnetkraft bzw. Haltekraft dienen.

Bei den Magneten kann es sich um Permanentmagnete, Elektromagnete oder eine Kombination von Elektromagneten und Permanentmagneten handeln. Die Magnete können so angeordnet sein, dass sie jeweils ein Werkstück an den Anlagebereich ziehen oder drücken. Es kann jedem Anlagebereich ein einzelner Magnet zugeordnet sein, oder es können auch mehrere Magnete an jedem Anlagebereich vorgesehen sein, beispielsweise an jeder Anlagefläche ein Magnet. Alternativ kann auch ein Magnet für mehrere Aufnahmen vorgesehen sein. Ferner sind Kombinationen dieser Anordnungen erfindungsgemäß möglich.

Ist das wenigstens eine Werkstück aus einem nicht-magnetischen Werkstoff bzw. Material hergestellt, z. B. aus einem keramischen Werkstoff, so kann das wenigstens eine Werkstück in wenigstens einer Hülse haltend aufgenommen werden. Die wenigstens eine Hülse kann dann aus einem magnetischen Material hergestellt sein und von der wenigstens einen Krafterzeugungsvorrichtung zusammen mit dem Werkstück an dem Anlagebereich gehalten werden.

Die wenigstens eine Krafterzeugungseinheit kann auch mit einer Unterdruckquelle oder einer Druckluftquelle gekoppelt sein. Die Krafterzeugungseinheit kann wenigstens eine Düse oder einen Stutzen zum Ansaugen des wenigstens einen Werkstücks sein.

Die wenigstens eine Aufnahmevorrichtung kann gemäß einer Ausführungsform eine Mehrzahl von Aufnahmen aufweisen. Die Mehrzahl von Aufnahmen kann zueinander versetzt angeordnet sein. Die Aufnahmevorrichtung kann ein plattenförmiges Element aufweisen, in dem die Mehrzahl der Aufnahmen ausgebildet ist. Die Aufnahmen können mit einem vorbestimmten Abstand in mehreren Reihen in dem wenigstens einen plattenförmigen Element ausgebildet sein. Jeder Aufnahme kann wenigstens eine Krafterzeugungseinheit zugeordnet sein. In den Anlagebereich jeder Aufnahme kann eine Krafterzeugungseinheit integriert sein.

Im Folgenden werden beispielhafte Ausführungsformen mit Bezug auf die beigefügten Figuren beschrieben. Es stellen dar:
- FIG. 1: eine perspektivische Ansicht der Aufnahmevorrichtung gemäß einer Ausführungsform der Erfindung;
- FIG. 2: eine Draufsicht der Aufnahmevorrichtung gemäß FIG. 1;
- FIG. 3: ein vergrößerter Ausschnitt des Details III in FIG. 2; und
- FIG: 4: eine Schnittansicht entlang der Schnittlinie IV-IV in FIG. 3.

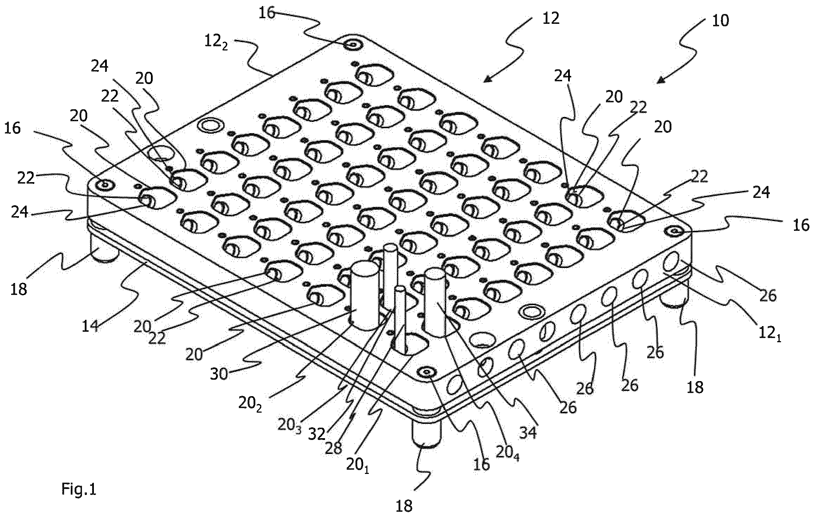

FIG. 1 zeigt eine perspektivische Ansicht der Aufnahmevorrichtung 10.

Die Aufnahmevorrichtung 10 umfasst eine Aufnahmeplatte 12 und eine Bodenplatte 14. Die Aufnahmeplatte 12 und die Bodenplatte 14 sind über Schrauben 16 miteinander verbunden, an denen Füße 18 zum Abstützen der Aufnahmevorrichtung 10 angeordnet sind.

In der Aufnahmeplatte 12 ist eine Vielzahl von Aufnahmen 20 ausgebildet, von denen in FIG. 1 aus Gründen der Übersichtlichkeit nur einige mit den Bezugszeichen 20 versehen sind. Die Aufnahmen 20 weisen jeweils eine Krafterzeugungseinheit 22 auf. Jeder Aufnahme 20 in der Aufnahmeplatte 12 ist eine Krafterzeugungseinheit 22 zugeordnet. Die Krafterzeugungseinheiten 22 sind jeweils in die zugeordnete Aufnahme 20 integriert. Jede Krafterzeugungseinheit 22 ist in einer Öffnung 24 in der Aufnahme 20 aufgenommen. Die Öffnungen 24 werden mit Durchgangsbohrungen 26 erhalten, die sich von einer Seite 12₁ der Aufnahmeplatte 12 zur anderen Seite 12₂ der Aufnahmeplatte 12 erstrecken, d. h. die Durchgangsbohrungen 26 erstrecken sich von der Seite 12₁ bis 12₂ der Aufnahmeplatte 12. Über die Durchgangsbohrungen 26 können die Öffnungen 24 in den Aufnahmen 20 schnell und einfach hergestellt werden.

In den Aufnahmen 20₁, 20₂, 20₃, und 20₄ sind Werkstücke 28, 30, 32, und 34 erkennbar. Die Werkstücke 28, 30, 32, 34 sind allesamt zylindrisch ausgebildet, weisen jedoch unterschiedliche Durchmesser auf. Obwohl die Werkstücke 28, 30, 32, 34 unterschiedliche Durchmesser aufweisen, können sie in den Aufnahmen 20₁, 20₂, 20₃, und 20₄ in einer vorbestimmten Position und in einer vorbestimmten Lage bzw. Stellung gehalten werden. Die vorbestimmte Stellung entspricht hier einer aufrechten Stellung, in der die Längsachse der Werkstücke 28, 30, 32, 34 vertikal verläuft. In ihrer vorbestimmten Position und Stellung werden die Werkstücke 28, 30, 32, 34 mit der von der Krafterzeugungseinheit 22 erzeugten Haltekraft zusammen mit den Aufnahmen 20 gehalten. Die von den Krafterzeugungseinheiten 22 erzeugte Haltekraft wirkt berührungsfrei auf die Werkstücke 28, 30, 32, 34 ein.

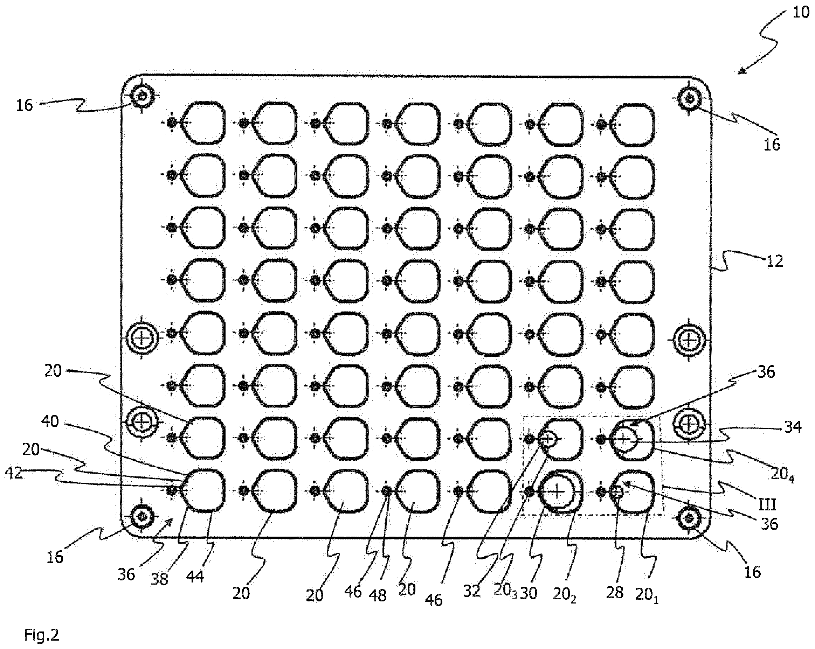

In FIG. 2 ist eine Draufsicht der Aufnahmevorrichtung 10 gezeigt.

Die Aufnahmen 20 sind in sieben Reihen zu je acht Aufnahmen an der Aufnahmeplatte 12 angeordnet bzw. in der Aufnahmeplatte 12 ausgebildet. Die Aufnahmen 20 weisen vorbestimmte Abstände zueinander auf. Jeder Aufnahme 20 kann an der Aufnahmeplatte 12 eine vorbestimmte bzw. vordefinierte Position zugeordnet werden.

Jede Aufnahme 20 weist einen Anlagebereich 36 auf, an dem sich die Werkstücke 28, 30, 32, 34 zumindest abschnittsweise anlegen können. Der Anlagebereich 36 weist eine erste Anlagefläche 38 und eine zweite Anlagefläche 40 auf. Die erste Anlagefläche 38 und die zweite Anlagefläche 40 werden über einen gewölbt verlaufenden Anlageflächenabschnitt 42 miteinander verbunden. Die Anlageflächen 38, 40 schließen zwischen sich einen vorbestimmten Winkel ein. Ein derart ausgebildeter Anlagebereich 36 ermöglicht die Anlage von Werkstücken mit unterschiedlichen Durchmessern, wie durch die Werkstücke 28, 30, 32, 34 in den Aufnahmen 20₁, 20₂, 20₃, und 20₄ ersichtlich wird. Werkstücke mit kleinem Durchmesser wie das Werkstück 28 und Werkstücke mit einem großem Durchmesser 30 können an dem Anlagebereich 36 in ihrer vorbestimmten Position und Stellung gehalten werden. Die Aufnahmen 20 weisen eine umlaufende Wandung 44 auf. Die Anlageflächen 38, 40 und der gewölbt verlaufende Anlageflächenabschnitt 42 sind Teil der umlaufenden Wandung 44. Die Aufnahmen 20 sind in Form eines Vielecks mit abgerundeten Ecken ausgebildet.

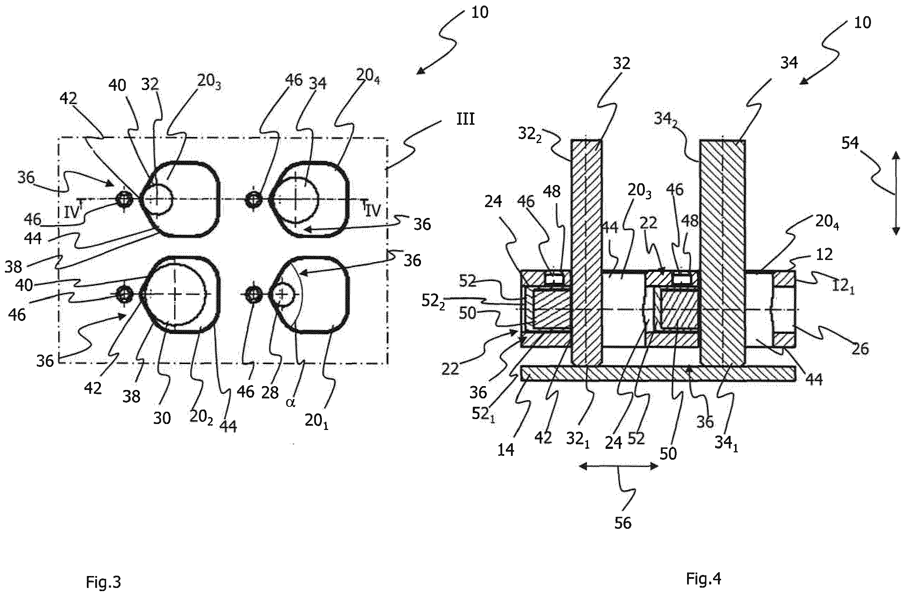

Der Anlagebereich 36 weist ferner eine Öffnung 46 auf, die zum Positionieren der Krafterzeugungseinheit 22 in der Öffnung 24 (siehe Figuren 1 und 4) dient. In der Öffnung 46 kann ein Positionierelement 48 aufgenommen sein.

FIG. 3 zeigt eine vergrößerte Ansicht des mit Strichpunktlinie umrahmten Details III in FIG. 2.

In FIG. 3 wird deutlich, wie sich die Werkstücke 28, 30, 32, 34 mit ihren unterschiedlichen Durchmessern an die Anlageflächen 38, 40 und den die beiden Anlageflächen 38, 40 miteinander verbindenden gewölbten Abschnitt 42 anlegen. Der gewölbt verlaufende Abschnitt 42 stellt einen abgerundeten Übergang zwischen den beiden Anlageflächen 38 und 40 dar. Werkstücke mit einem kleinen Durchmesser, wie das Werkstück 28, legen sich hauptsächlich an den gewölbten Abschnitt 42 an. Werkstücke mit einem relativ großem Durchmesser, wie das Werkstück 30, legen sich dagegen nicht an den gewölbten Abschnitt 42 an, sondern kontaktieren jeweils eine Kontaktstelle jeder der Anlageflächen 38, 40. Die Öffnungen 46 sind im Anlagebereich 36 jeder Aufnahme 20 dem gewölbten Abschnitt 42 vorgelagert. Die beiden Anlageflächen 38, 40 laufen aufeinander und damit auf die Öffnung 46 zu. Die Anlageflächen 38, 40 verlaufen mit einem vorbestimmten Winkel α zueinander bzw. schließen den vorbestimmten Winkel α zwischen sich ein. Der Winkel α kann zwischen 90° und 170° betragen. Durch den Winkel α, den die Anlageflächen 38, 40 zueinander einnehmen, wird gewährleistet, dass die Werkstücke 28, 30, 32, 34 auch mit ihren unterschiedlichen Durchmessern in einer vorbestimmten Position und in einer vorbestimmten Lage oder Stellung in der Aufnahme 20 gehalten werden können.

FIG. 4 zeigt eine Schnittansicht entlang der Schnittlinie IV-IV in FIG. 3.

In FIG. 4 sind die Aufnahmen 20₃ und 20₄ und die darin aufgenommenen Werkstücke 32, 34 erkennbar. Die Platte 14 bildet den Boden der Aufnahmevorrichtung, an dem sich die Werkstücke 32, 34 mit ihren Stirnseiten 32₁ und 34₁ abstützen. Die Werkstücke 32, 34 legen sich mit ihrer Außenumfangsfläche 32₂ und 34₄ an den Anlageabschnitt 36 zumindest abschnittsweise an. In dem Anlagebereich 36 ist die Öffnung 24 erkennbar. In der Öffnung 24 ist die Krafterzeugungseinrichtung 22 aufgenommen. Die Krafterzeugungseinheit 22 weist einen Permanentmagnet 50 auf. Der Magnet 50 ist in einer Hülse 52 aufgenommen. Die Hülse 52 liegt wiederum mit ihrer Außenumfangsfläche 52₁ an der Innenumfangsfläche der Öffnung 24 an. Die Hülse 52 weist einen Boden 52₂ auf, an den sich der Magnet 50 mit einer seiner Stirnseiten anlegen kann. Der Boden 52₂ zeigt in der Öffnung 24 in Richtung des Werkstücks 32 in der Aufnahme 20₃. Der Boden 52₂ der Hülse 52 kann zum Abschirmen einer der Pole des Magneten 50 dienen, damit beispielsweise der der Aufnahme 20₄ zugeordnete Magnet 50 nicht auf das Werkstück 32 in der Aufnahme 20₃ einwirken kann. Die jeweils andere Stirnseite des Magneten 50 ist frei und weist in Richtung der Außenumfangsfläche 34₂ des Werkstücks, 34. Somit kann die Magnetkraft als Haltekraft auf das Werkstück 34 in der Aufnahme 20₄ berührungsfrei einwirken. In der Öffnungen 46 sind Positionierelemente 48 aufgenommen, die die Krafterzeugungseinheit 22 in der Öffnung 24 an ihrer vorbestimmten Position halten.

Die Werkstücke 32, 34 können in Richtung des Doppelpfeils 54 in die Aufnahmen 20₃, 20₄ eingeführt und aus den Aufnahmen 20₃, 20₄ entnommen werden. Der Doppelpfeil 54 verläuft in vertikaler Richtung. Die Werkstücke 32, 34 werden in Richtung des Pfeils 54 in die Aufnahmen 20, 23₄ eingeführt, bis die Stirnseiten 32₁ und 34₁ an der Bodenplatte 14 anliegen. Die Magnete 50 der Krafterzeugungseinheiten 22 erzeugen eine Haltekraft, die im Wesentlichen in Richtung des Doppelpfeils 56 auf die Werkstücke 32, 34 einwirkt. Die Haltekraft wirkt senkrecht zur Einführrichtung 54 der Werkstücke 32, 34 auf die Werkstücke 32, 34 ein. Die Werkstücke 32, 34 können mittels der Haltekraft in ihrer vorbestimmten Position an dem Anlagebereich 36 in der Aufnahme 20₃, 20₄ gehalten werden, wobei die Haltekraft berührungsfrei auf die Werkstücke 32, 34 einwirkt.

Die Wandung 44 der Aufnahmen 20 und damit auch die Anlageflächen 38, 40 und 42 (Figur 3) erstrecken sich senkrecht zu der Richtung 56 der von der Krafterzeugungseinheit 22 erzeugten Haltekraft. Die Wandung 44 der Aufnahmen 20 erstreckt sich senkrecht zu der Bodenplatte 14. Die Bodenplatte 14 weist einen vorbestimmten Abstand zur Aufnahmeplatte 12 auf. Der Abstand zwischen der Bodenplatte 14 und der Aufnahmeplatte 12 kann beispielsweise durch die Größe oder Länge der aufzunehmenden Werkstücke bestimmt werden. Mit anderen Worten kann die Aufnahmevorrichtung 10 über den Abstand zwischen der Bodenplatte 14 und der Aufnahmeplatte 12 an unterschiedlich große Werkstücke angepasst werden.

In Figur 4 sind ferner die Durchgangsbohrungen 26 erkennbar, mit denen die Öffnungen 24 in den Aufnahmen 20 ausgebildet werden.

Die erfindungsgemäße Aufnahmeplatte 10 erlaubt es, die Werkstücke 32, 34 in Richtung des Pfeils 54 in die Aufnahmen 20₃, 20₄ einzusetzen, ohne dass zur Betätigung einer Fixier- bzw. Klemmeinheit zusätzliche Bewegungen von Komponenten oder den Werkstücken 32, 34 selbst in einer weiteren Richtung ausgeführt werden müssten. Dies wird durch die Krafterzeugungseinheit 22 erreicht, die die Werkstücke 32, 34 berührungsfrei mit einer Haltekraft in Richtung des Pfeils 56 beaufschlagen kann. Durch die Haltekraft können die Werkstücke 32, 34 an den Anlagebereich 36 gedrückt oder gezogen werden. Die Aufnahmevorrichtung 10 ermöglicht somit eine schnelle und einfache Aufnahme und auch Entnahme der Werkstücke 32, 34 in den Aufnahmen 20₃ und 20₄.

## Patentansprüche

1. Aufnahmevorrichtung (10) zum zumindest abschnittweisen Aufnehmen von Werkstücken (28, 30, 32, 34), insbesondere zylindrischen Werkstücken, in wenigstens einer vorbestimmten Position, mit
- wenigstens einer Aufnahme (20) zum zumindest abschnittsweisen Aufnehmen wenigstens eines Werkstücks (28, 30, 32, 34), wobei die wenigstens eine Aufnahme wenigstens einen vorbestimmte Anlagebereich (36) aufweist, an den sich das wenigstens eine Werkstück (28, 30, 32, 34) in der vorbestimmten Position anlegt, und wenigstens einer Krafterzeugungseinheit (22) zum Erzeugen einer Haltekraft, die das wenigstens eine Werkstück (28, 30, 32, 34) an dem wenigstens einen Anlagebereich (36) in der vorbestimmten Position hält, wobei der wenigstens eine Anlagebereich (36) derart ausgebildet ist, dass das wenigstens eine Werkstück (28, 30, 32, 34) durch die wenigstens eine Krafterzeugungseinheit (22) in einer vorbestimmten Position und Lage in der wenigstens einen Aufnahme (20) positionierbar ist, wobei der wenigstens eine Anlagebereich (36) derart ausgebildet ist, dass die Längsachse von in der wenigstens einen Aufnahme (20) aufgenommenen Werkstücken in vertikaler Richtung verläuft, **dadurch gekennzeichnet, dass** die von der wenigstens einen Krafterzeugungseinheit (22) erzeugte Haltekraft berührungsfrei auf das wenigstens eine Werkstück (28, 30, 32, 34) einwirkt, und dass die wenigstens eine Krafterzeugungseinheit (22) wenigstens einen Magnet (50) aufweist, wobei der wenigstens eine Magnet (50) in einer Öffnung (24) in der wenigstens einen Aufnahme (20) angeordnet ist.

2. Aufnahmevorrichtung (10) nach Anspruch 1,
wobei die wenigstens eine Aufnahme (20) derart ausgebildet ist, dass das wenigstens eine Werkstück (28, 30, 32, 34) in einer vorbestimmten Einführ- oder Entnahmerichtung (54) in die Aufnahme (20) einführbar oder aus der Aufnahme (20) entnehmbar ist.

3. Aufnahmevorrichtung (10) nach Anspruch 1 oder 2,
wobei der wenigstens eine Anlagebereich (36) wenigstens zwei Anlageflächen (38, 40) und einen gewölbt verlaufenden Anlageflächenabschnitt (42) zur Anlage des Werkstücks (28, 30, 32, 34) aufweist, wobei die wenigstens zwei Anlageflächen (38, 40) zwischen sich einen vorbestimmten Winkel (α) einschließen und über den gewölbt verlaufenden Anlageflächenabschnitt (42) miteinander verbunden sind.

4. Aufnahmevorrichtung (10) nach einem der Ansprüche 1 bis 3,
wobei die von der wenigstens einen Krafterzeugungseinheit (22) erzeugte Haltekraft im Wesentlichen senkrecht zur Einführ- oder Entnahmerichtung (54) des wenigstens einen Werkstücks (28, 30, 32, 34) auf das wenigstens eine Werkstück (28, 30, 32, 34) einwirkt.

5. Aufnahmevorrichtung (10) nach einem der Ansprüche 1 bis 4,
wobei die wenigstens eine Krafterzeugungseinheit (22) in dem wenigstens einen Anlagebereich (36) der wenigstens einen Aufnahme (20) angeordnet ist.

6. Aufnahmevorrichtung (10) nach Anspruch 5,
wobei in dem wenigstens einen Anlagebereich (36) wenigstens die Öffnung (24) ausgebildet ist, in der die wenigstens eine Krafterzeugungseinheit (22) aufgenommen ist.

7. Aufnahmevorrichtung (10) nach einem der Ansprüche 3 bis 6,
wobei die wenigstens eine Aufnahme (20) eine Durchgangsöffnung mit einer umlaufenden Wandung (44) ist, wobei die wenigstens zwei Anlageflächen (38, 40) und der die wenigstens zwei Anlageflächen (38, 40) verbindende gewölbte Anlageflächenabschnitt (42) Teil der umlaufenden Wandung (44) sind.

8. Aufnahmevorrichtung (10) nach einem der Ansprüche 1 bis 7,
wobei wenigstens ein plattenförmiges Element (14) den Boden der wenigstens einen Aufnahme (20) bildet.

9. Aufnahmevorrichtung (10) nach einem der Ansprüche 3 bis 8,
wobei sich die wenigstens zwei Anlageflächen (38, 40) und der gewölbt verlaufenden Anlageflächenabschnitt (42) im Wesentlichen senkrecht oder schräg zur Richtung (56) der von der wenigstens einen Krafterzeugungseinheit (22) erzeugten Haltekraft erstrecken.

10. Aufnahmevorrichtung (10) nach Anspruch 8 oder 9,
wobei die wenigstens zwei Anlageflächen (38, 40) im Wesentlichen senkrecht oder schräg zu dem wenigstens einen plattenförmigen Element (14) verlaufen.

11. Aufnahmevorrichtung (10) nach einem der Ansprüche 1 bis 10,
wobei der wenigstens eine Magnet (50) ein Permanentmagnet oder ein Elektromagnet oder eine Kombination aus Permanentmagnet und Elektromagnet ist.

12. Aufnahmevorrichtung (10) nach einem der Ansprüche 1 bis 11,
wobei jedem Anlagebereich (36) ein einzelner Magnet (50) oder mehrere Magnete (50) zugeordnet sind, oder wobei ein Magnet (50) für mehrere Aufnahmen (20) vorgesehen ist.

13. Aufnahmevorrichtung (10) nach einem der Ansprüche 1 bis 12,
wobei der wenigstens eine Magnet (50) in wenigstens einer Hülse (52) aufgenommen ist.

14. Aufnahmevorrichtung (10) nach einem der Ansprüche 6 bis 13,
wobei die wenigstens eine Krafterzeugungseinheit (22) über wenigstens ein Positionierelement (46) in der Öffnung (24) in dem wenigstens einen Aufnahmebereich (36) gehalten wird.

15. Aufnahmevorrichtung (10) nach einem der Ansprüche 1 bis 14,
wobei die Aufnahmevorrichtung (10) eine Mehrzahl von Aufnahmen (20) aufweist, die die in Längs- oder Querrichtung der wenigstens einen Aufnahmevorrichtung (10) zueinander versetzt angeordnet sind.

16. Aufnahmevorrichtung (10) nach Anspruch 15,
wobei jeder Aufnahme (20) wenigstens eine Krafterzeugungseinheit (22) zugeordnet ist.

## Claims

1. A holding device (10) for accommodating workpieces (28, 30, 32, 34) at least portionwise, in particular cylindrical workpieces, in at least one predetermined position, with
at least one holder (20) for accommodating at least one workpiece (28, 30, 32, 34) at least portionwise, wherein the at least one holder comprises at least one predetermined abutment area (36) on which the at least one workpiece (28, 30, 32, 34) abuts in the predetermined position, and at least one force generation unit (22) for generating a holding force, which holds the at least one workpiece (28, 30, 32, 34) in the predetermined position, wherein the at least one abutment area (36) is configured in such a manner that the at least one workpiece (28, 30, 32, 34) is positionable in a predetermined position and location in the at least one holder (20) by the at least one force generation unit (22), wherein the at least one abutment area (36) is configured such that the longitudinal axes of workpieces held in the at least one holder (20) extend in the vertical direction,
**characterised in that** the holding force generated by the at least one force generation unit (22) acts contactless on the at least one workpiece (28, 30, 32, 34), and **in that** the at least one force generation unit (22) comprises at least one magnet (50), wherein the at least one magnet (50) is arranged in an opening (24) in the at least one holder (20).

2. The holding device (10) according to Claim 1,
wherein the at least one holder (20) is configured in such a manner that the at least one workpiece (28, 30, 32, 34) is insertable into or removable from the holder (20) in a predetermined insertion or removal direction (54).

3. The holding device (10) according to Claim 1 or 2,
wherein the at least one abutment area (36) comprises at least two abutment surfaces (38, 40) and a curved abutment surface portion (42) for the abutment of the workpiece (28, 30, 32, 34), wherein the at least two abutment surfaces (38, 40) include a predetermined angle (α) between them and are connected with each other via the curved abutment surface portion (42).

4. The holding device (10) according to any of Claims 1 to 3,
wherein the holding force generated by the at least one force generation unit (22) acts essentially perpendicular to the insertion or removal direction (54) of the at least one workpiece (28, 30, 32, 34) on the at least one workpiece (28, 30, 32, 34).

5. The holding device (10) according to any of Claims 1 to 4,
wherein the at least one force generation unit (22) is arranged in the at least one abutment area (36) of the at least one holder (20).

6. The holding device (10) according to Claim 5,
wherein at least the opening (24) is formed in the at least one abutment area (36), in which the at least one force generation unit (22) is accommodated.

7. The holding device (10) according to any of Claims 3 to 6,
wherein the at least one holder (20) is a through-hole with a surrounding wall (44),
wherein the at least two abutment surfaces (38, 40) and the curved abutment surface portion (42) connecting the at least two abutment surfaces (38, 40) are parts of the surrounding wall (44).

8. The holding device (10) according to any of Claims 1 to 7,
wherein at least one plate-shaped element (14) forms the bottom of the at least one holder (20).

9. The holding device (10) according to any of Claims 3 to 8,
wherein the at least two abutment surfaces (38, 40) and the curved abutment surface portion (42) extend essentially perpendicular or oblique to the direction (56) of the holding force generated by the at least one force generation unit (22).

10. The holding device (10) according to Claim 8 or 9,
wherein the at least two abutment surfaces (38, 40) extend essentially perpendicular or oblique to the at least one plate-shaped element (14).

11. The holding device (10) according to any of Claims 1 to 10,
wherein the at least one magnet (50) is a permanent magnet or an electromagnet or a combination of permanent magnet and electromagnet.

12. The holding device (10) according to any of Claims 1 to 11,
wherein a single magnet (50) or several magnets (50) are associated with each abutment area (36), or wherein one magnet (50) is provided for several holders (20).

13. The holding device (10) according to any of Claims 1 to 12,
wherein the at least one magnet (50) is accommodated in at least one sleeve (52).

14. The holding device (10) according to any of Claims 6 to 13,
wherein the at least one force generation unit (22) is held in the opening (24) in the at least one abutment area (36) via at least one positioning element (46).

15. The holding device (10) according to any of Claims 1 to 14,
wherein the holding device (10) comprises a plurality of holders (20) which are arranged offset to one another in the longitudinal or transverse direction of the at least one holding device (10)

16. The holding device (10) according to Claim 15,
wherein at least one force generation unit (22) is associated with each holder (20).

## Revendications

1. Dispositif de réception (10) destiné à recevoir au moins partiellement des pièces à usiner (28, 30, 32, 34), en particulier des pièces à usiner cylindriques, dans au moins une position prédéterminée, comprenant
- au moins un logement (20) destiné à recevoir au moins partiellement au moins une pièce à usiner (28, 30, 32, 34), ledit au moins un logement présentant au moins une zone d'appui (36) prédéterminée contre laquelle ladite au moins une pièce à usiner (28, 30, 32, 34) s'appuie dans la position prédéterminée, et au moins une unité de génération de force (22) destinée à produire une force de maintien qui maintient ladite au moins une pièce à usiner (28, 30 32, 34) contre ladite au moins une zone d'appui (36) dans la position prédéterminée, ladite au moins une zone d'appui (36) étant conçue de telle manière que ladite au moins une pièce à usiner (28, 30, 32, 34) est positionnable à l'aide de ladite au moins une unité de génération de force (22) dans une position prédéterminée dans ledit au moins un logement (20), ladite au moins une zone d'appui (36) étant conçue de telle manière que l'axe longitudinal des pièces à usiner logées dans ledit au moins un logement (20) s'étend dans le sens vertical, **caractérisé en ce que** la force de maintien produite par ladite au moins une unité de génération de force (22) agit sans contact sur ladite au moins une pièce à usiner (28, 30, 32, 34) et que ladite au moins une unité de génération de force (22) présente au moins un aimant (50), ledit au moins un aimant (50) étant disposé dans une ouverture (24), dans ledit au moins un logement (20).

2. Dispositif de réception (10) selon la revendication 1,
ledit au moins un logement (20) étant conçu de telle manière que ladite au moins une pièce à usiner (28, 30, 32, 34) peut être introduite dans le logement (20) ou prélevée du logement (20) dans un sens d'introduction ou de prélèvement prédéterminé (54).

3. Dispositif de réception (10) selon la revendication 1 ou 2,
ladite au moins une zone d'appui (36) présentant au moins deux surfaces d'appui (38, 40) et une partie de surface de contact (42) destinée à l'appui de la pièce à usiner (28, 30, 32, 34) s'étendant de manière incurvée, lesdites au moins deux surfaces d'appui (38, 40) formant entre elles un angle prédéterminé (α) et étant reliées l'une à l'autre par la partie de surface de contact (42) s'étendant de manière incurvée.

4. Dispositif de réception (10) selon l'une des revendications 1 à 3,
la force de maintien produite par ladite au moins une unité de génération de force (22) agissant pour l'essentiel perpendiculairement au sens d'introduction ou de prélèvement (54) de ladite au moins une pièce à usiner (28, 30, 32, 34) sur ladite au moins une pièce à usiner (28, 30, 32, 34).

5. Dispositif de réception (10) selon l'une des revendications 1 à 4,
ladite au moins une unité de génération de force (22) étant disposée dans ladite au moins une zone d'appui (36) dudit au moins un logement (20).

6. Dispositif de réception (10) selon la revendication 5,
au moins l'ouverture (24), dans laquelle est logée ladite au moins une unité de génération de force (22), étant ménagée dans ladite au moins une zone d'appui (36).

7. Dispositif de réception (10) selon l'une des revendications 3 à 6,
ledit au moins un logement (20) consistant en une ouverture traversante pourvue d'une paroi périphérique (44), lesdites au moins deux surfaces d'appui (38, 40) et la partie de surface de contact (42) de forme incurvée reliant lesdites au moins deux surfaces d'appui (38, 40) faisant partie intégrante de la paroi périphérique (44).

8. Dispositif de réception (10) selon l'une des revendications 1 à 7,
au moins un élément sous forme de plaque (14) constituant le fond dudit au moins un logement (20).

9. Dispositif de réception (10) selon l'une des revendications 3 à 8,
lesdites au moins deux surfaces d'appui (38, 40) et la partie de surface de contact (42) de forme incurvée s'étendant pour l'essentiel de façon perpendiculaire ou oblique par rapport à la direction (56) de la force de maintien produite par ladite au moins une unité de génération de force (22).

10. Dispositif de réception (10) selon l'une des revendications 8 ou 9,
lesdites au moins deux surfaces d'appui (38, 40) s'étendant pour l'essentiel de façon perpendiculaire ou oblique par rapport audit au moins un élément sous forme de plaque (14).

11. Dispositif de réception (10) selon l'une des revendications 1 à 10,
ledit au moins un aimant (50) consistant en un aimant permanent ou en un électroaimant ou en une combinaison d'aimant permanent et d'électro-aimant.

12. Dispositif de réception (10) selon l'une des revendications 1 à 11,
un seul aimant (50) ou plusieurs aimants (50) étant associés à chaque zone d'appui (36), ou un aimant (50) étant prévu pour plusieurs logements (50).

13. Dispositif de réception (10) selon l'une des revendications 1 à 12,
ledit au moins un aimant (50) étant logé dans au moins une douille (52).

14. Dispositif de réception (10) selon l'une des revendications 6 à 13,
ladite au moins une unité de génération de force (22) étant maintenue à l'aide d'au moins un élément de positionnement (46) dans l'ouverture (24) ménagée dans ladite au moins une zone de logement (36).

15. Dispositif de réception (10) selon l'une des revendications 1 à 14,
le dispositif de réception (10) présentant une pluralité de logements (20) qui sont disposés décalés les uns par rapport aux autres dans la direction longitudinale ou transversale dudit au moins un dispositif de réception (10).

16. Dispositif de réception (10) selon la revendication 15,
au moins une unité de génération de force (22) étant associée à chaque logement (20).
